# EUROPEAN PATENT SPECIFICATION

(11) **EP 3 495 042 B1**
(45) Date of publication and mention of the grant of the patent: **04.11.2026**
(21) Application number: 18211497.5
(22) Date of filing: 11.12.2018
(51) Int. Cl.: B01J 23/89, B01J 35/00, C01B 15/029, B01J 37/16

(54) **DIRECT HYDROGEN PEROXIDE SYNTHESES USING CATALYST COMPOSITIONS CONTAINING A PLATINUM-NICKEL ALLOY**
DIREKT-SYNTHESEN VON WASSERSTOFFPEROXID MIT PLATIN-NICKEL-LEGIERUNGS-KATALYSATOR-ZUSAMMENSETZUNGEN
SYNTHÈSES DIRECTES DU PÉROXYDE D'HYDROGÈNE AVEC COMPOSITIONS DE CATALYSEUR CONTENANT UN ALLIAGE PLATINE-NICKEL

(30) Priority: 11.12.2017 KR 20170169766
(43) Date of publication of application: 12.06.2019
(73) Proprietor: Korea Institute of Science and Technology, Seoul 02792 (KR)
(72) Inventor: LEE, Seung Yong, 02792 Seoul (KR); HAN, Sang Soo, 02792 Seoul (KR); NAM, Hyo Bin, 02792 Seoul (KR); YEO, Byung Chul, 02792 Seoul (KR); CHO, So Hye, 02792 Seoul (KR); JANG, Ho Seong, 02792 Seoul (KR)
(74) Representative: Zacco Sweden AB

(56) References cited:
- WO-A1-2015/022548
- US-A- 5 178 971
- US-A1- 2014 097 387
- NORIAKI WAKABAYASHI ET AL: "Temperature Dependence of Oxygen Reduction Activity at Pt. Fe, Pt. Co, and Pt. Ni Alloy Electrodes", JOURNAL OF PHYSICAL CHEMISTRY PART B: CONDENSED MATTER, MATERIALS, SURFACES, INTERFACES & BIOPHYSICAL, vol. 109, no. 12, 1 March 2005 (2005-03-01), US, pages 5836 - 5841, XP055580336, ISSN: 1520-6106, DOI: 10.1021/jp046204+
- SANJAY K. SINGH ET AL: "Bimetallic Ni-Pt Nanocatalysts for Selective Decomposition of Hydrazine in Aqueous Solution to Hydrogen at Room Temperature for Chemical Hydrogen Storage", INORGANIC CHEMISTRY, vol. 49, no. 13, 5 July 2010 (2010-07-05), pages 6148 - 6152, XP055092911, ISSN: 0020-1669, DOI: 10.1021/ic1007654
- MATHE NTOMBIZODWA R ET AL: "Methanol oxidation reaction activity of microwave-irradiated and heat-treated Pt/Co and Pt/Ni nano-electrocatalysts", INTERNATIONAL JOURNAL OF HYDROGEN ENERGY, ELSEVIER SCIENCE PUBLISHERS B.V., BARKING, GB, vol. 39, no. 33, 11 October 2014 (2014-10-11), pages 18871 - 18881, XP029084760, ISSN: 0360-3199, DOI: 10.1016/J.IJHYDENE.2014.09.070
- YE LINSEN ET AL: "Preparation and characterization of hydrophobic carbon-supported Pt3M (M = Fe, Co, Ni and Cr) bimetals for H/D isotope separation between hydrogen and water", INTERNATIONAL JOURNAL OF HYDROGEN ENERGY, ELSEVIER SCIENCE PUBLISHERS B.V., BARKING, GB, vol. 39, no. 25, 28 April 2014 (2014-04-28), pages 13793 - 13799, XP029016495, ISSN: 0360-3199, DOI: 10.1016/J.IJHYDENE.2014.04.029
- YAOJUAN HU ET AL: "Effects of structure, composition, and carbon support properties on the electrocatalytic activity of Pt-Ni-graphene nanocatalysts for the methanol oxidation", APPLIED CATALYSIS B: ENVIRONMENTAL, ELSEVIER, AMSTERDAM, NL, vol. 111, 24 October 2011 (2011-10-24), pages 208 - 217, XP028345273, ISSN: 0926-3373, [retrieved on 20111024], DOI: 10.1016/J.APCATB.2011.10.001
- ZHAO YUE ET AL: "Three-dimensional PtxNi1-xnanoclusters supported on multiwalled carbon nanotubes in enzyme-free glucose biofuel c", JOURNAL OF POWER SOURCES, vol. 296, 18 July 2015 (2015-07-18), pages 30 - 39, XP029259457, ISSN: 0378-7753, DOI: 10.1016/J.JPOWSOUR.2015.07.032
- ZHAOKE ZHENG ET AL: "Epitaxial Growth of Au-Pt-Ni Nanorods for Direct High Selectivity H2O2 Production", ADVANCED MATERIALS, vol. 28, no. 45, 17 October 2016 (2016-10-17), DE, pages 9949 - 9955, XP055579976, ISSN: 0935-9648, DOI: 10.1002/adma.201603662
- OKAMOTO H.: "Ni-Pt (Nickel-Platinum)", JOURNAL OF PHASE EQUILIBRIA AND DIFFUSION, vol. 31, no. 3, 11 March 2010 (2010-03-11), US, pages 322 - 322, XP093268992, ISSN: 1547-7037, Retrieved from the Internet <URL:https://link.springer.com/content/pdf/10.1007/s11669-010-9701-0.pdf> DOI: 10.1007/s11669-010-9701-0
- LEE HONG WOO ET AL: "Solid-solution alloying of immiscible Pt and Au boosts catalytic performance for H2O2 direct synthesis", ACTA MATERIALIA. ELSEVIER, OXFORD, GB, vol. 205, 16 December 2020 (2020-12-16), XP086462379, ISSN: 1359-6454, [retrieved on 20201216], DOI: 10.1016/J.ACTAMAT.2020.116563
- HUI YANG ET AL: "Structure and electrocatalytic activity of carbon-supported Pt-Ni alloy nanoparticles toward the oxygen reduction reaction", JOURNAL OF PHYSICAL CHEMISTRY. B, MATERIALS, SURFACES, INTERFACES AND BIOPHYSICAL WASHINGTON, DC, US, vol. 108, no. 30, 1 January 2004 (2004-01-01), pages 11024 - 11034, XP009128147, ISSN: 1089-5647
- SEO DONG-HWA ET AL: "First-Principles Design of Hydrogen Dissociation Catalysts Based on Isoelectronic Metal Solid Solutions", JOURNAL OF PHYSICAL CHEMISTRY LETTERS, vol. 5, no. 11, 8 May 2014 (2014-05-08), US, pages 1819 - 1824, XP093402108, ISSN: 1948-7185, Retrieved from the Internet <URL:https://pubs.acs.org/doi/pdf/10.1021/jz500496e> DOI: 10.1021/jz500496e

## Description

The present invention relates to methods for synthesizing hydrogen peroxide in a direct synthesis reaction using hydrogen and oxygen in the presence of a catalyst or a catalyst composition; and more particularly, the catalyst and the catalyst composition containing: an alloy of two elements, wherein the elements are Pt (Platinum) and Ni(Nickel). For reference, a government research and development project on future materials is being carried out by the applicant, Korea Institute of Science and Technology (KIST), from February 1, 2018 to January 31, 2019. Herein, a subject of the government research and development project on future materials is quantum alchemy catalyst development.

In various industries such as pulp and paper manufacturing, fiber, water treatment, compounds manufacturing, petrochemistry and semiconductors, etc., hydrogen peroxide (H₂O₂) is used as polish, disinfectants, oxidants, and fuels, etc. The production of the hydrogen peroxide is increasing every year, and according to Transparency Market Research, the global market size of the hydrogen peroxide is expected to reach approximately six billion dollars by 2023. A formula for direct synthesis reaction of the hydrogen peroxide from hydrogen and oxygen may be simple, however, a commercialization process has not been developed because the reaction is difficult to achieve. The global market size is expected to grow gradually through replacing the conventional inefficient synthesizing process of the hydrogen peroxide with an eco-friendly thereof.

Meanwhile, noble metals such as a Palladium(Pd) are being widely used to catalyze the direct synthesis reaction of the hydrogen peroxide. Herein, the Pd catalyst exhibits high activity on the synthesis reaction. However, such noble metals have a high cost of production. Accordingly, it is required to develop a new catalyst based on low-priced elements to meet the demand of the rapidly growing global market of the hydrogen peroxide.

The following documents relate to Pt-Ni alloy catalysts, catalyst compositions, oxygen reduction reactions, fuel cell electrocatalysts, hydrogen peroxide formation or related catalytic reactions:
Noriaki Wakabayashi et al., "Temperature Dependence of Oxygen Reduction Activity at Pt, Fe, Pt, Co, and Pt, Ni Alloy Electrodes", Journal of Physical Chemistry B, vol. 109, no. 12, 2005, pages 5836-5841.

Sanjay K. Singh et al., "Bimetallic Ni-Pt Nanocatalysts for Selective Decomposition of Hydrazine in Aqueous Solution to Hydrogen at Room Temperature for Chemical Hydrogen Storage", Inorganic Chemistry, vol. 49, no. 13, 2010, pages 6148-6152.

Mathe Ntombizodwa R et al., "Methanol oxidation reaction activity of microwave-irradiated and heat-treated Pt/Co and Pt/Ni nanoelectrocatalysts", International Journal of Hydrogen Energy, vol. 39, no. 33, 2014, pages 18871-18881.

Ye Linsen et al., "Preparation and characterization of hydrophobic carbon-supported Pt3M (M = Fe, Co, Ni and Cr) bimetals for H/D isotope separation between hydrogen and water", International Journal of Hydrogen Energy, vol. 39, no. 25, 2014, pages 13793-13799.

Yaojuan Hu et al., "Effects of structure, composition, and carbon support properties on the electrocatalytic activity of Pt-Ni-graphene nanocatalysts for the methanol oxidation", Applied Catalysis B: Environmental, vol. 111, 2011, pages 208-217.

US 2014/097387 A1.

Zhao Yue et al., "Three-dimensional PtxNi1-x nanoclusters supported on multiwalled carbon nanotubes in enzyme-free glucose biofuel cell", Journal of Power Sources, vol. 296, 2015, pages 30-39.

Zhaoke Zheng et al., "Epitaxial Growth of Au-Pt-Ni Nanorods for Direct High Selectivity H2O2 Production", Advanced Materials, vol. 28, no. 45, 2016, pages 9949-9955.

WO 2015/022548 A1.

US 5,178,971 A.

Hui Yang et al., "Structure and electrocatalytic activity of carbon-supported Pt-Ni alloy nanoparticles toward the oxygen reduction reaction", Journal of Physical Chemistry B, vol. 108, no. 30, 2004, pages 11024-11034.

It is an object of the present invention to present a method for synthesizing hydrogen peroxide in which a high-priced Palladium(Pd) catalyst is replaced with a new catalyst.

It is still another object of the present invention to provide a method for synthesizing hydrogen peroxide in a direct synthesis reaction using hydrogen and oxygen in the presence of a catalyst.

The present invention is defined by the appended claims.

A method for synthesizing hydrogen peroxide is presented. The method is performed using a catalyst, containing: an alloy of two elements, wherein the elements are Pt(Platinum) and Ni(Nickel) .

The alloy forms solid solution.

As one example, the alloy has a face-centered tetragonal structure.

The alloy catalyzes direct synthesis reaction of hydrogen peroxide (H₂O₂).

The molecular formula of the alloy is represented as Pt_{X}Ni_{(100-X)}, and wherein the X satisfies no less than 6 and no more than 83.

As one example, a structure of the Pt-Ni catalyst is similar to that of a Palladium(Pd) catalyst.

As one example, an electronic structure of the Pt-Ni catalyst is similar to that of a Palladium(Pd) catalyst in that DOS (Electron Density of State) values of the Pt-Ni catalyst are similar to those of the Pd catalyst.

An alternative method for synthesizing hydrogen peroxide is presented. The method is performed using a catalyst composition, containing: an alloy of two elements, wherein the elements are Pt(Platinum) and Ni(Nickel).

The alloy forms solid solution.

As one example, the alloy has a face-centered tetragonal structure.

The alloy catalyzes direct synthesis reaction of hydrogen peroxide (H₂O₂).

The molecular formula of the alloy is represented as Pt_{X}Ni_{(100-X)}, and wherein the X satisfies no less than 6 and no more than 83.

As one example, an electronic structure of the Pt-Ni catalyst is similar to that of a Palladium(Pd) catalyst in that DOS (Electron Density of State) values of the Pt-Ni catalyst are similar to those of the Pd catalyst.

The drawings attached below are to explain example embodiments and are only part of preferred embodiments. Other drawings may be obtained based on the drawings herein without inventive work for those skilled in the art. The above and other objects and features of the present invention will become apparent from the following description of preferred embodiments given in conjunction with the accompanying drawings, in which:
Fig. 1 is an exemplary diagram to illustrate a crystal structure of Pt-Ni alloy.
Fig. 2 is an exemplary diagram to illustrate a DOS(Electron Density of State) result of the Pt-Ni alloy and that of Pd.
Fig. 3 is a table to illustrate respective amounts of synthesized hydrogen peroxide per each of ratios of Pt and Ni in Pt-Ni catalyst.
Fig. 4 includes HAADF(High-angle Annular Dark Field)-STEM(Scanning Transmission Electron Microscope) images of the Pt-Ni alloy generated while varying a ratio of the Pt and the Ni.

To make purposes, technical solutions, and advantages of the present invention clear, reference is made to the accompanying drawings that show, by way of illustration, more detailed example embodiments in which the invention may be practiced. These preferred embodiments are described in sufficient detail to enable those skilled in the art to practice the invention.

It is to be appreciated that the various embodiments of the present invention, although different, are not necessarily mutually exclusive. For example, a particular feature, structure, or characteristic described herein in connection with one embodiment may be implemented within other embodiments without departing from the scope of the present invention. In addition, it is to be appreciated that the position or arrangement of individual elements within each disclosed embodiment may be modified without departing from the scope of the present invention. The following detailed description is, therefore, not to be taken in a limiting sense, and the scope of the present invention is defined only by the appended claims.

In the drawings, like numerals refer to the same or similar functionality throughout the several views.

Hereinafter, preferred embodiments will be described in detail with reference to the accompanying drawings.

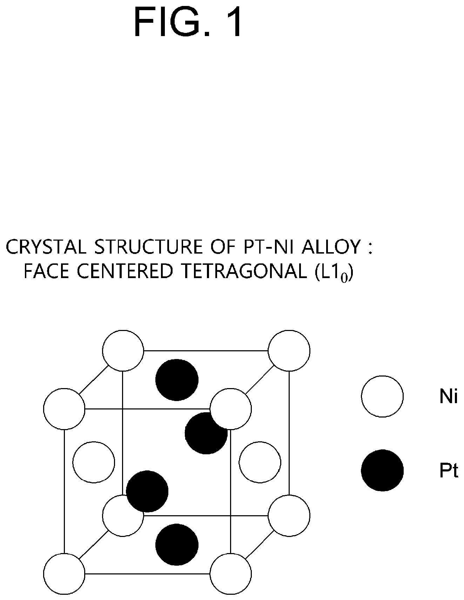

Fig. 1 is an exemplary diagram to illustrate a crystal structure of Pt-Ni alloy.

Referring to Fig. 1, a catalyst may contain an alloy of two elements. Herein, the elements are Pt(Platinum) and Ni(Nickel). In detail, the Pt-Ni alloy may form solid solution where particles of the Pt and particles of the Ni are uniformly distributed.

Also, the Pt-Ni alloy may have a face-centered tetragonal structure (L1₀).

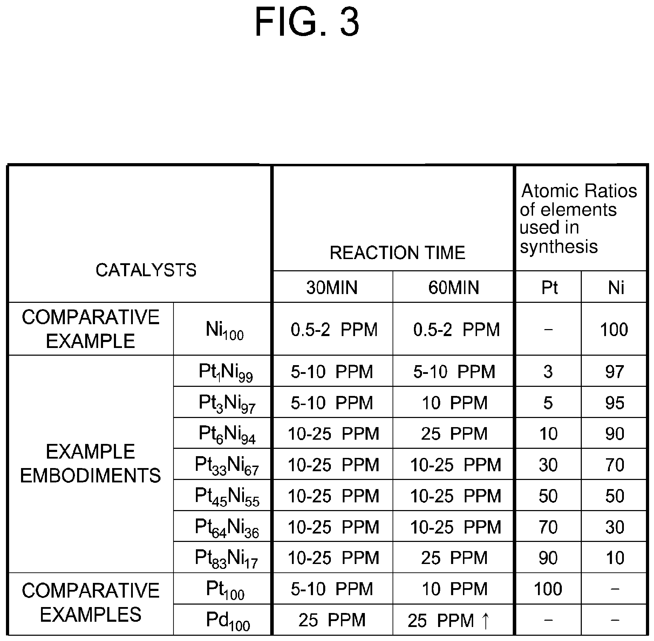

Herein, Fig. 1 illustrates one of various example embodiments of the Pt-Ni alloy, however, the respective number of Pt atoms and Ni atoms per unit cell is not limited to Fig. 1. The Pt-Ni catalyst may be composed of various atomic ratios(Pt:Ni). Detailed explanation on the atomic ratios will be made in the following by referring to Fig. 3.

Meanwhile, preparation of the Pt-Ni catalyst may include steps of: (a) obtaining a warm solution by dissolving 0.17 mmol of H₂[PtCl₆]_{X}H₂O, 0.17 mmol of Ni(acac)₂, and 2 mL of oleylamine into 10 mL of dioctyl ether at a temperature of 50°C; (b) obtaining dark brown colloids by preparing a butyllithium solution containing 15 mL of the dioctyl ether and 1.2 mL of 2.0M butyllithium in cyclohexane and by injecting the warm solution into the butyllithium solution via a syringe at room temperatures; (c) stirring the dark brown colloids for 20 minutes, heating the colloids up to 120°C for 1.5 hours in Ar atmosphere, and then heating the colloids up to 260°C for an hour; (d) cooling down the colloids to room temperatures, injecting 1.25 mL of trioctylphosphine into the colloids for protection and then washing nanoparticles of an obtained catalyst three times with ethanol.

Herein, at the step of (a), the atomic ratios (Pt:Ni) determined by the amounts of two elements may be various from 3:97 to 90:10.

Meanwhile, the Pt-Ni catalyst catalyzes direct synthesis reaction of hydrogen peroxide (H₂O₂) . A formula for the direct synthesis reaction of the hydrogen peroxide using hydrogen and oxygen may be simple, however, a commercialization process has not been developed because the reaction is difficult to achieve. To catalyze the direct synthesis reaction of the hydrogen peroxide, noble metals such as a palladium(Pd) are being widely used as a catalyst. A Pd catalyst exhibits high activity on the synthesis reaction, however, such a metal has shortcomings due to a high cost of production.

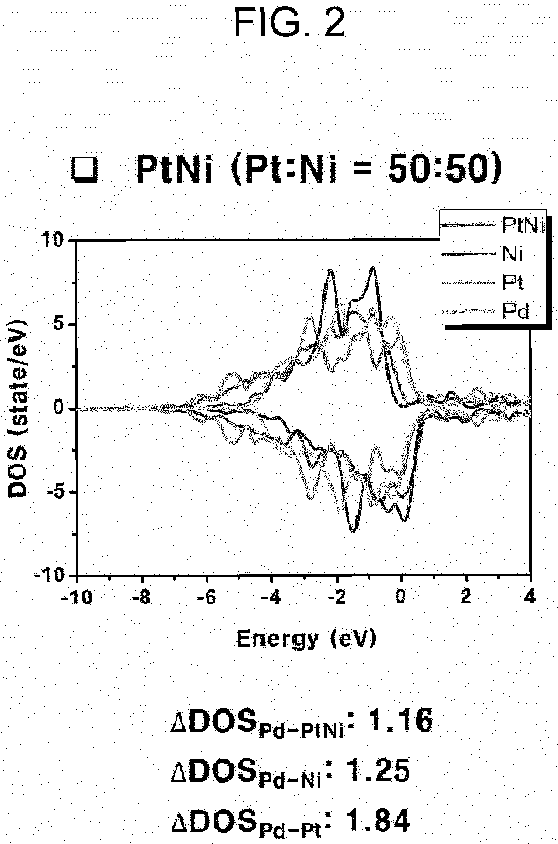

The Pt-Ni catalyst may replace the Pd catalyst. It is confirmed that the Pt-Ni catalyst in accordance with the present disclosure and the Pd catalyst according to a comparative example of the conventional technology have similar electronic structures. Detailed explanation on the similarity will be made below by referring to Fig. 2.

### (The example embodiments)

Fig. 2 is an exemplary diagram to illustrate a DOS(Electron Density of State) result of the Pt-Ni alloy and that of the Pd.

In a formula below, ΔDOS_{X-y} is a value obtained by comparing respective DOS values of X and Y, with each other. Herein, the X and the Y may respectively be a substance or a composition, etc. The nearer the ΔDOS_{X-y} reaches to 0, the more similar the respective DOS values of the X and the Y become with each other. If the X and the Y have similar electronic structures at a specific energy state, similar chemical characteristics can be exhibited as well. Specifically, if a substance, or a composition, etc. is determined as having a similar electronic structure to the Pd by referring to a ΔDOS value near 0, it is expected that a catalyst containing the substance or the composition, etc. may have similar catalyst characteristics with the Pd catalyst. $Δ {DOS}_{X - Y} = {\left\{{\left[{DOS}_{X}\left(E\right)-{DOS}_{Y}\left(E\right)\right]}^{2}g\left(E; σ\right)dE\right\}}^{1 / 2}$ $g \left(E; σ\right) = \frac{1}{σ \sqrt{Xπ}} {e}^{- {\left(E-{E}_{F}\right)}^{2} / 2 {σ}^{2}}$

In Fig. 2, respective DOS values of the Ni, the Pt, and the Pd are illustrated as comparative examples to emphasize the similarity of DOS values of the Pt-Ni alloy(Pt:Ni=50:50) to those of the Pd. Herein, the DOS values of the Pt-Ni alloy exhibits more similarities with the DOS values of the Pd compared to the respective DOS values of the Ni and the Pt.

Further, a ΔDOS_{Pd-PtNi} shows 1.16, which is closer to 0 compared to a ΔDOS_{Pd-Ni} showing 1.25 and ΔDOS_{Pd-Pt} showing 1.84. That is, the Pt-Ni alloy has more similar DOS values with the Pd than the Ni and the Pt.

Through these results, it is confirmed that the Pt-Ni catalyst has a similar electronic structure and similar catalyst characteristics with the Pd catalyst.

Meanwhile, detailed explanation on respective amounts of synthesized hydrogen peroxide per each of ratios of the Pt and the Ni in the Pt-Ni catalyst will be made in the following by referring to Fig. 3.

Herein, preparing the Pt-Ni catalyst with the respective atomic ratios to assess the activity of the respective atomic ratios may be carried out without the heat treatment or the washing process, but it is not limited thereto. Also, the Pt-Ni catalyst with the respective atomic ratios may be prepared in a liquid state or a powder state, but it is not limited thereto.

### (Example of assessment)

An experiment on the direct synthesis reaction of the hydrogen peroxide to confirm the catalyst characteristics of the Pt-Ni catalyst was conducted per each of the atomic ratios.

More specifically, in the experiment, the hydrogen peroxide was synthesized by using 0.0015 mmol nanoparticles of the Pt-Ni catalyst, 2mL solution containing deionize water-ethanol (20%), 0.02M phosphoric acid(H₃PO₄), and 0.9mM NaBr. Herein, gas flow in the synthesis process was 70mL/min(4%H₂ in Ar 50mL/min, O₂ 20mL/min; H₂:O₂=10:1).

Herein, the direct synthesis reaction of the hydrogen peroxide was conducted for 30 and 60 minutes, by using the Pt-Ni catalyst with the respective atomic ratios. Strips which change their colors depending on the amounts of the hydrogen peroxide were used for measuring the amounts of the hydrogen peroxide per each of the atomic ratios. The respective results of the amounts of the synthesized hydrogen peroxide are illustrated in Fig. 3.

The activities of Pt₁Ni₉₉, Pt₃Ni₉₇, Pt₆Ni₉₄, Pt₃₃Ni₆₇, Pt₄₅Ni₅₅, Pt₆₄Ni₃₆, and Pt₈₃Ni₁₇ were measured as the example embodiments, and the activities of Ni₁₀₀, Pt₁₀₀, and Pd₁₀₀ were measured as the comparative examples.

Compared to results that the amounts of the synthesized hydrogen peroxide with the Ni₁₀₀ catalyst were respectively 0.5 ~ 2 ppm after 30 and 60 minutes of reaction time, the activities per each of the atomic ratios of the Pt-Ni catalyst (PtₓNi_{(100-X)}) in accordance with the example embodiments surpassed the activities of the Ni₁₀₀ when the X satisfied values same as or larger than 1. Further, the activities of the Pt-Ni catalyst (PtₓNi_{(100-X)}) surpassed the activities of the Pt₁₀₀ even when the X satisfied 83. That is, it was confirmed that the Pt-Ni catalyst (PtₓNi_{(100-X)}) exhibits high activities when the X satisfies no less than 1 and no more than 83.

Also, the amounts of the synthesized hydrogen peroxide with the Pd₁₀₀ were 25 ppm after 30 minutes of the reaction time and same as or larger than 25 ppm after 60 minutes of the reaction time. Further, the amounts of the synthesized hydrogen peroxide with the Pt₁₀₀ were 5-10ppm after 30 minutes of the reaction time and 10ppm after 60 minutes of the reaction time. Compared to these results, it was confirmed that the Pt-Ni catalyst (PtₓNi_{(100-X)}) exhibits high activity as 40% ~ 100% of a degree of activity of the Pd₁₀₀, when the X satisfies no less than 6 and no more than 83.

Particularly, it was confirmed that the Pt-Ni catalyst (PtₓNi_{(100-X)}) exhibits distinctly high activity as almost 100% of a degree of the activity of the Pd₁₀₀ when the X satisfies 6. That is, it was confirmed that the Pt₆Ni₉₄, which has large amount of the Ni, exhibits the highest activity among the example embodiments. This result indicates that the Pt-Ni catalyst may provide a wide selection range of the hydrogen peroxide in that the Ni has a lower price than the Pt.

Further, the Pt-Ni catalyst (PtₓNi_{(100-X)}) is a low-priced and high-active catalyst when the X satisfies no less than 3 and no more than 64 in that the Ni also has a lower price than the Pd, and that the Pt-Ni catalyst exhibits higher activities than the Pt₁₀₀ and similar activities with the Pd₁₀₀.

Through the results explained above, it was confirmed that the Pt-Ni catalyst catalyzes the direct synthesis reaction of the hydrogen peroxide. Further, it was also confirmed that the Pt-Ni catalyst has a competitive price and the high activity, which enables replacement of the conventional Pd catalyst.

Meanwhile, a Pt-Ni catalyst composition is provided. The explanation on the catalyst characteristics of the Pt-Ni catalyst and the activities per each of the atomic ratios thereof will be omitted not to make a repetition.

Herein, the Pt-Ni catalyst composition including the Pt-Ni alloy may be carried in a certain catalyst support. Also, the Pt-Ni catalyst composition may further include a certain substance for catalyzing the direct synthesis reaction of the hydrogen peroxide.

A method for synthesizing the hydrogen peroxide by using the Pt-Ni catalyst or the Pt-Ni catalyst composition is provided.

The method for synthesizing the hydrogen peroxide using the Pt-Ni catalyst may replace a conventional method using the Pd catalyst owing to its competitive price. Also, it is expected to meet the demand of the global market of the hydrogen peroxide by replacing the conventional inefficient synthesizing process of the hydrogen peroxide with an eco-friendly process thereof.

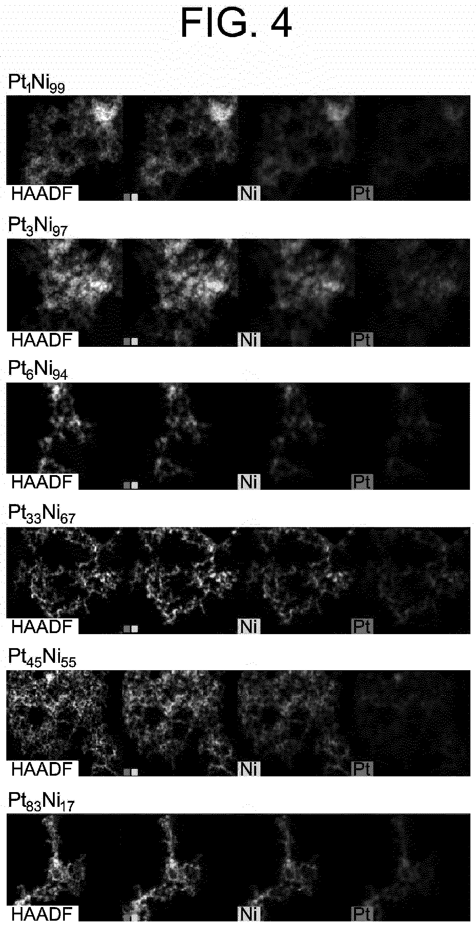

Next, detailed explanation on analysis on HAADF(High-angle Annular Dark Field)-STEM(Scanning Transmission Electron Microscope) images of the Pt-Ni alloy generated while varying a ratio of the Pt and the Ni in accordance with one example embodiments will be made below by referring to Fig. 4.

Fig. 4 includes the HAADF-STEM images of the Pt-Ni alloy in accordance with example embodiments. By analyzing the images for each of the atomic ratios of the Pt-Ni alloy, Fig. 4 exhibits the catalyst characteristics of the Pt-Ni catalyst.

In Fig. 4, the HAADF-STEM images shown in White may be illustrated as original images for each of the atomic ratios of the Pt-Ni alloy. Herein, the HAADF-STEM images were obtained by Talos F200X manufactured by FEI Company at an accelerating voltage of 200kV.

Further, mapping images, shown in Yellow, Green, and Red, generated from the HAADF-STEM images by using EDS(Energy Dispersive Spectrometer), may be illustrated. Specifically, the mapping images may include images of the Pt-Ni alloy in Yellow, those of the Ni in Green and those of the Pt in Red. Herein, the mapping images were obtained by Super-X EDS SYSTEM manufactured by Bruker Corporation at a measurement range of 0~40kV.

By referring to the mapping images of the Pt-Ni alloy in Yellow, it is observed that the mapping images of the Ni in Green and those of the Pt in Red exhibit uniform distribution of the Ni and the Pt. That is, the Pt atoms and the Ni atoms are uniformly distributed in one or more particles of the Pt-Ni alloy, even if the atomic ratio of the Pt-Ni alloy changes from the Pt₁Ni₉₉ to the Pt₈₃Ni₁₇.

As seen above, the present invention has been specifically described by such matters as detailed components, limited embodiments, and drawings. While the invention has been shown and described with respect to the preferred embodiments, it, however, may be appreciated by those skilled in the art that various changes and modifications may be made without departing from the scope of the present invention as defined in the following claims.

## Claims

1. A method for synthesizing hydrogen peroxide, the method comprising:
synthesizing hydrogen peroxide in a direct synthesis reaction using hydrogen and oxygen in the presence of a catalyst containing an alloy of two elements, wherein the elements are platinum and nickel, wherein the alloy forms a solid solution, wherein a molecular formula of the alloy is represented as Pt_{X}Ni_{(100-X)}, and wherein the X satisfies no less than 6 and no more than 83.

2. A method for synthesizing hydrogen peroxide, the method comprising:
synthesizing hydrogen peroxide in a direct synthesis reaction using hydrogen and oxygen in the presence of a catalyst composition comprising a catalyst support and a catalyst containing an alloy of two elements, wherein the elements are platinum and nickel, wherein the alloy forms a solid solution, wherein a molecular formula of the alloy is represented as Pt_{X}Ni_{(100-X)}, wherein the X satisfies no less than 6 and no more than 83, and wherein in the catalyst composition the catalyst is supported by the catalyst support.

3. The method of claim 1 or 2, wherein the alloy is selected from:
Pt₆Ni₉₄;
Pt₃₃Ni₆₇;
Pt₄₅Ni₅₅;
Pt₆₄Ni₃₆;
Pt₈₃Ni₁₇.

4. The method of claim 3, wherein the alloy has a face-centered tetragonal structure.

## Patentansprüche

1. Verfahren zum Synthetisieren von Wasserstoffperoxid, wobei das Verfahren umfasst:
Synthetisieren von Wasserstoffperoxid in einer Direktsynthesereaktion unter Verwendung von Wasserstoff und Sauerstoff in Gegenwart eines Katalysators, der eine Legierung aus zwei Elementen enthält, wobei die Elemente Platin und Nickel sind, wobei die Legierung eine feste Lösung bildet, wobei eine Molekularformel der Legierung als PtₓNi₍₁₀₀₋ₓ₎ dargestellt wird und wobei X nicht weniger als 6 und nicht mehr als 83 beträgt.

2. Verfahren zum Synthetisieren von Wasserstoffperoxid, wobei das Verfahren umfasst:
Synthetisieren von Wasserstoffperoxid in einer Direktsynthesereaktion unter Verwendung von Wasserstoff und Sauerstoff in Gegenwart einer Katalysatorzusammensetzung, die einen Katalysatorträger und einen Katalysator umfasst, der eine Legierung aus zwei Elementen enthält, wobei die Elemente Platin und Nickel sind, wobei die Legierung eine feste Lösung bildet, wobei eine Molekularformel der Legierung als PtₓNi₍₁₀₀₋ₓ₎ dargestellt wird, wobei X nicht weniger als 6 und nicht mehr als 83 beträgt und wobei in der Katalysatorzusammensetzung der Katalysator vom Katalysatorträger getragen wird.

3. Verfahren nach Anspruch 1 oder 2, wobei die Legierung ausgewählt ist aus:
Pt₆Ni₉₄;
Pt₃₃Ni₆₇;
Pt₄₅Ni₅₅;
Pt₆₄Ni₃₆;
Pt₈₃Ni₁₇.

4. Verfahren nach Anspruch 3, wobei die Legierung eine flächenzentriert tetragonale Struktur aufweist.

## Revendications

1. Procédé de synthèse du peroxyde d'hydrogène, le procédé comprenant :
la synthèse du peroxyde d'hydrogène par une réaction de synthèse directe à partir d'hydrogène et d'oxygène en présence d'un catalyseur contenant un alliage de deux éléments, dans lequel les éléments sont le platine et le nickel, dans lequel l'alliage forme une solution solide, dans lequel la formule moléculaire de l'alliage est représentée par PtₓNi₍₁₀₀₋ₓ₎, et dans lequel X est supérieur ou égal à 6 et inférieur ou égal à 83.

2. Procédé de synthèse du peroxyde d'hydrogène, le procédé comprenant :
la synthèse du peroxyde d'hydrogène par une réaction de synthèse directe à partir d'hydrogène et d'oxygène en présence d'une composition de catalyseur comprenant un support de catalyseur et un catalyseur contenant un alliage de deux éléments, dans lequel les éléments sont le platine et le nickel, dans lequel l'alliage forme une solution solide, dans lequel la formule moléculaire de l'alliage est représentée par PtₓNi₍₁₀₀₋ₓ₎, dans lequel X est supérieur ou égal à 6 et inférieur ou égal à 83, et dans lequel, au sein de la composition de catalyseur, le catalyseur est supporté par le support de catalyseur.

3. Procédé selon la revendication 1 ou 2, dans lequel l'alliage est choisi parmi :
Pt₆Ni_{94 ;}
Pt33Ni67 ;
Pt45Ni55 ;
Pt64Ni36 ;
Pt₈₃Ni₁₇.

4. Procédé selon la revendication 3, dans lequel l'alliage présente une structure tétragonale à faces centrées.
